# EUROPEAN PATENT APPLICATION

(11) **EP 4 295 675 A1**
(43) Date of publication of application: **27.12.2023**
(21) Application number: 22180577.3
(22) Date of filing: 22.06.2022
(51) Int. Cl.: A01K 5/02

(54) **METHOD FOR DETERMINING CONTROL DATA FOR A MIXING UNIT OF A FEED MIXING APPLIANCE**

(71) Applicant: Adisseo France S.A.S., 92160 Antony (FR)
(72) Inventor: COZANNET, Pierre, 22260 Plouec du Trieux (FR); GRAS, Céline, 69008 Lyon (FR); CAYZAC, Angélique, 75008 Paris (FR); GERAERT, Pierre-André, 37210 Rochecorbon (FR)
(74) Representative: Germain Maureau

(57) **Abstract**

A computer-implemented method (100) for determining feed mixing unit control data (46) for a mixing unit (42) of a feed mixing appliance (24) is proposed. The determination is based on a net energy model for animal nutrition and considers additional animal health status data (16) as well as environmental conditions data (18) of a livestock (20) for a more precise calculation of an actual energy demand (228) of the animals (14). The feed mixing unit control data (46) comprises data regarding volumes and ratios of raw materials (10) and additives (12) as well as mixing process control data and is calculated such that a net energy (226) of a produced feed mix (22) is equal to an actual net energy demand (228) of a livestock (20). In addition, a feed mixing appliance (24) and service platform model is proposed wherein the control unit (40) along with a feed formula database (48) is centrally located at a cloud computing site.

## Description

### FIELD OF THE INVENTION

The invention relates to a method, a computer program, and a computer-readable medium for determining feed mixing control data for a mixing unit of a feed mixing appliance. Furthermore, the invention relates to a mixing appliance for producing an animal feed mix.

### BACKGROUND OF THE INVENTION

Animal production is constantly facing internal and external challenges, which require rapid response and continuous adaptation to keep optimizing production efficiency while reducing the environmental impacts. Optimization of nutritional and economic aspect of animal production remain complex, even with current tools. The future of animal production is associated with the availability of new alternative feed ingredients and requirement for further refinement. The availability of new tools for chemical or physical raw materials evaluation and for animal evaluation provide opportunities for improvements.

One of the challenges remains the precise prediction of a nutritional demand of an animal. Known models in prior art rely on nutritional tables which consider a variety of input factors such as species and age. It is shown that the results from such nutritional tables are not sufficiently precise due to the complexity of the influencing factors. More recent models rely on the net energy regime as the underlying principle. For instance, WO 2019/217707 A1 describes a model for predicting an energy to be used to determine an appropriate amount of food to feed to a companion animal.

While accuracy may be improved using the net energy model, the complexity of calculation and the complexity of influencing factors induce limitations for practical application. In terms of practical implementation and logistics, feed is usually produced in feed mill plants. Such service providers provide storing, mixing and delivering of feed, for instance for poultry, swine or cattle. In certain cases, such feed mills may be hosted on-site along with large-scale animal production facilities, for example as integrated production system. From a perspective of a feed mill operator, two key components need to be covered. Firstly, the determination of the feed formulation and, secondly, based on the formulation, the production of the final animal feed mix. Whereas the latter can be seen as a commodity standard process, the precise determination of the feed formulation is a challenging complex subject-matter which requires substantial resources.

### DESCRIPTION OF THE INVENTION

Improvements may therefore be required, firstly, in terms of economic and environmental efficiency for feed mill plant operators, and secondly, in terms of a higher accuracy of a determination of a feed formulation matching actual nutritional needs of animals and supporting further optimisation of the production process. The independent claims of the current application provide these technical improvements.

The subject-matters of the independent claims are based on the following considerations. Currently feed mill operators and farmers need to manually enter a plurality of input variables into different software tools to derive a feed formulation. These software packages usually comprise average nutrition tables and equations for calculating the feed formulation. In prior art, a plurality of different approaches is known such as INRA, NRC, CVB or Brazilian nutritional tables defining requirements for energy, amino acids and minerals of animals such as pigs, poultry, and cattle for different phases of production or growth. For instance, requirements for net energy, amino acids, and minerals such as calcium, phosphorus of growing animals such as pigs, poultry or cattle are available for different phases of production. Additionally, digestible and metabolizable and net energy values can be provided. All this needs to be kept up-to-date and maintained. While the net energy model provides more accurate feed formulation determination, the complex calculation and databases are constantly evolving. To maintain a high accuracy of actual net energy requirements and feed formulation determination, the underlying intelligence needs to be professionally managed. This proposes an operational challenge to the traditional feed mill operators.

Therefore, a method for determining feed mixing control data for a mixing unit of a feed mixing appliance is proposed. A feed mixing appliance can be located on-premise of a traditional feed mill or be located in proximity of a stall, barn or poultry house of a farm. The feed mixing appliance comprises a raw materials analysis unit for determining raw materials and/or additives net energy values. The underlying consideration is that a quality of raw materials can vary due to different reasons. Raw materials can be cereals such as corn, wheat, soy, cereal by-products, meals, oilseedmeals, fibres, animal by-products, coproducts from other industry, oils and fats, synthetic amino acids etc.

Such quality variations have an implication on the provisioned energy from the raw materials and therefore have an influence on the raw materials net energy. As a feed mill receives deliveries of different kinds of raw materials in different batches from different suppliers. However, even within the same kind of raw materials such as corn or soy, there can be variations in quality and contained energy.

The raw materials analysis unit can, according to an example, comprise two stages of analysis. In a first stage, the current batch of raw materials or samples of it are chemically and/or physically analysed providing analytical results. Such analytical results can be proximities, total amino acids, protein, crude fat, starch, NSP (non-starch polysaccharides), fibre or mineral contents. Raw materials can comprise nutrients such as crude protein, crude fat, starch, neutral detergent fibre and others and antinutritional contents. In a second stage, these measured variables are processed with equations to calculate net energy values. In scientific literature, different equations and approaches are known.

Additives can be, for example, amino acids, enzymes, probiotics, butyrate and others and can be added to raw materials. The net energy system can provide more precise information when determining exact volumes or portions of additives as part of a feed formulation, as it considers the more complex effects beyond sole digestibility. In case of an animal suffering a disease, heat generation is normally increased leading to a higher portion of energy used for maintaining body functions due to pathogenic bacteria, an increase of cell turnover and/or increase of protein breakdown and excretion.

Additives can support controlling or limiting such heat increment leading to a securing of microbiota, decreasing cell turnover and/or decreasing protein turnover leading to performance improvements.

Therefore, according to an example, determining an additives net energy comprises a consideration of energy related effects of additives in an animal organism. The net energy model can, furthermore, be used to determine nutritional values of feed additives. Such nutritional values can be a basis for a feed formulation software, for instance for feed mill operators, which can be configured to optimize cost or other target variables.

In prior art, a large discrepancy between the ME (metabolizable energy or energy available for the metabolism of the animals) and the performance, growth or production is reported. Therefore, there was a need to develop a more global approach based on a net energy system, considering the energy losses for animal body maintenance and animal heat production while putting a focus on retained energy as protein and fat supporting the growth and production of the animals. Furthermore, the net energy model allows to consider additional influencing factors into the feed formulation system. A raw material analysis unit can be arranged at a raw material storage device such as a silo but can also be located in a spatially separated laboratory. The analysis can be, for example, based on physical spectroscopy technology. The energy values can typically be measured, for instance, in Megajoule per kilogram of raw materials.

The mixing appliance comprises a control unit configured to calculate the feed mixing unit control data, wherein the feed mixing control data comprises a feed formulation of raw materials and/or additives. In other words, the feed mixing unit control data can be any kind of information or data that are able to control a mixing process and to produce an animal feed mix. A feed formulation can be a ratio or percentage of different ingredients, here different raw materials and/or different additives. A feed formulation can also be, for example, a result of a chemical reaction based on raw materials and/or additives.

The control unit can be one or more processors with associated storage, memory, peripherals and input/output units. A control unit can also be a server located in a cloud computing environment in a data centre. The control unit can be divided into different functions, whereas each function can be implemented on different hardware located in different locations. The control unit is adapted to control the mixing unit, for instance, controlling a supply of raw materials and/or a supply of additives into a mixing unit. Furthermore, the control unit can be adapted to control the mixing unit to produce an animal feed mix.

The mixing appliance further comprises a mixing unit adapted to mix, based on the feed mixing control data, defined volumes of raw materials and/or defined volumes of feed additives to produce a feed mix. In an example, the mixing appliance is, furthermore, adapted to ground raw materials. The defined volumes can be provided by controlled valves at silos containing raw materials and/or additives.

The proposed method comprises a first step of determining, by the raw materials analysis unit, a raw material net energy of a batch of raw materials. In other words, if raw materials are supplied by an external supplier, a sample of raw materials is chemically or physically analysed by applying the above described two stages approach. Firstly, measurement values from the physical or chemical analysis are obtained. Secondly, these measurement values are translated via static nutrition tables and equations into net energy values according to a selected net energy model. The advantage can be seen in more realistic and more accurate values of net energy coming from raw materials instead of taking fixed values.

In a following step, an animal health state and/or an environmental condition data of a livestock are obtained. A performance of an animal is influenced by its current health status and/or by environmental conditions in the livestock. Both variables have not been considered in the calculation of the feed formulation and in the control process for the mixing unit. By considering those additional influencing factors, the accuracy of an energy demand of a livestock can be significantly improved. A health state can be understood as a biochemical, medical and/or physical condition of an animal. For example, an animal health state can simply be obtained by an observation of animals by a person.

For example, an animal health status can be obtained by an analysis of animal noise in a barn or poultry house. Solutions, at least partly based on sound pattern recognition and artificial intelligence, are available in prior art to classify certain noise patterns as pathologies. Other methods of obtaining a health state of an animal can comprise a physical, biological or chemical analysis of litter or faeces. According to an example, skin lesions or dermatitis, or an animal body posture are determined to derive an animal health state.

Environmental conditions can be understood as any physical or chemical condition relating to an animal which is not related directly to feed. For instance, an environmental condition can be an inside temperature, outside temperature, humidity, bacteria or microorganism containment such as salmonella, ventilation, luminance, lighting intensity, longer term climate conditions and/or external noise. The consideration of an animal health state is based on the fact that in challenged conditions, an animal requires a higher portion of metabolizable energy for maintaining its body functions (MEₘ). The environmental conditions are strongly influencing the animal response through and beyond the effect of digestibility.

With the evolution of the climate, it is rather clear that the challenges concern more the hot conditions either chronic or heat waves that will challenge animals. Moreover, as their protein and amino acid requirement have progressed with the genetic development of muscle growth and productivity further challenge their energy metabolism. It can be seen as an advantage that through the net energy system such metabolic costs can be taken into account for any extra nutrient requirements from animals facing different types of sanitary and health challenges.

In a following step, a livestock net energy demand of a livestock based on the animal health state and/or based on an environmental conditions data of the livestock is determined. The objective can be seen in a more precise determination of an actual demand of energy for a livestock. Currently, such energy demand is calculated based on fixed values taken, for instance, from nutrition tables. Such static nutrition tables are available in scientific literature. With this invention, a dynamic approach is taken which is based on an actual physical or medical condition of the animals as well as actual environmental conditions of a livestock. As described above, baseline data under standard conditions can provide a first guidance related to a nutrition demand based on animal type and species, age and other static data. This baseline data is complemented by additional dynamic factors such as animal health state and/or environmental conditions data to achieve a higher accuracy of energy demand from a potential feed mix.

According to an example, a net energy demand under consideration of an animal health state and/or environmental conditions data can be determined using a correction factor representing an increased energy demand for metabolizable energy for maintenance of an animal in case of challenging health conditions or non-standard environmental condition data and/or other factors affecting energy metabolism. According to an example, determining a correction factor is based on measurements using respiratory chambers for animals. For example, an animal having an infection is placed in a respiratory chamber allowing a measurement of an animal heat production, a feed intake, measurement of losses such as faecal or urine and/or other animal properties. According to an example, an animal movement behaviour and/or animal noise emissions are observed, and an animal health state is obtained based on these data.

In a following step, the control unit calculates, based on the determined raw materials net energy, mixing unit control data for a mixing unit. These mixing unit control data comprise volumes or ratios of raw materials and additives, such that the resulting feed mix net energy of the produced feed mix is equal to the net energy demand of the livestock. In other words, this method provides the advantage of a matching between an actual demand of net energy of a livestock on one hand and a provided net energy of raw materials and/or additives on the other hand. An advantage can be seen in an optimised provisioning of raw materials and additives avoiding waste of feed on one hand and avoiding a shortage of nutrient leading to an insufficient growth of animals.

The mixing unit control data can comprise feed formulation information, meaning ratios or volumes of different kinds of raw materials and/or additives. For example, in a simple embodiment, the mixing unit control data comprise livestock net energy demand values and/or raw materials net energy values. As an optimisation is based on the net energy principle, a control of a mixing unit can be simplified if feed mill plants are provided with net energy values leaving the complex calculation with a specialised service provider. The mixing unit control data can further comprise any data capable to control a mixing unit such as controlling means for controlling a raw materials supply unit and/or additives supply unit for providing defined volumes of raw materials and/or additives.

Mixing unit control data can also comprise mixing process data defining processing properties of the mixing process such as temperature, pressure, speeds, granularity, control information of sequences and stages of the mixing process, and other mixing process data. According to an example, mixing unit control data are complemented with additional data such as pricing information related to additives and raw materials. The term "equal to the net energy demand of the livestock" relates to exact same values or minimal deviations from the net energy demand of the livestock. In other words, the two values get close to each other with a difference of less than 20%. For instance, the resulting feed mix net energy equals the determined net energy demand of the livestock with a variance of +/- 10%. According to an example, the resulting feed mix net energy equals the determined net energy demand of the livestock with a variance of +/- 5%. According to an example, the resulting feed mix net energy equals the determined net energy demand of the livestock with a variance of +/-1%.

According to an embodiment of the invention, obtaining the animal health status comprises measuring of immune parameters of animals of a livestock. In light of the underlying problem of an optimisation of a feed provisioning, one important influencing factor of the health of an animal is its immune system. In particular, related to a net energy demand of an animal, the state of the immune system has a strong influence. In other words, an infection status of animals can be determined. In case of a challenged immune system due to an infection, the net energy required for maintaining the animal's organism is increased. The overall ratios between metabolizable energy for maintenance (ME_{maintenance}) and metabolizable energy for protein (MEₚᵣₒₜₑᵢₙ) and metabolizable energy for fat (ME_{fat}) are changed in case of a challenged immune system. Following that syntax, net energy values can be expressed as NEₘ, NEₚᵣₒₜ and NE_{fat}.

More precisely, a total metabolizable energy of feed intake (MEᵢₙₜₐₖₑ) may be decreased as well as the net energy values for MEₚᵣₒₜₑᵢₙ and ME_{maintenance} in case of a challenged immune system. According to an example, measuring of immune parameters comprises analysing blood parameters such as the number of leucocytes in a blood sample.

According to an embodiment, measuring immune parameters comprises analysing movement patterns of animals, animal feed consumption patterns and/or determining a ratio of consumed feed to consumed water. Immune challenged animals often show different behaviour such as abnormal movement or slower movements or different noise emissions. According to an example, measuring immune parameters comprises analysing animal movement behaviour and/or animal noise emissions using a machine learning algorithm. For instance, training data is generated based on healthy animal behaviour and on animals with a challenged immune system.

According to an example, a neural network is trained to classify observed animal movement data to determine an animal health status. According to an example, animal movement data can be generated based on a capturing device such as a camera, movement sensor and/or acceleration sensor. Immune-challenged animals often increase portions of water while reducing feed intake. In another example, amounts and timing of feed and/or water intake may be analysed.

According to an embodiment, measuring immune parameters comprises a step of detecting an inflammatory status indicating a degree of an immune challenge. For a more precise evaluation of a net energy demand of a livestock it is desirable to know a degree of an immune challenge. In case of a light immune challenge, only a minor deviation from standard values can be expected, whereas in case of a major immune challenge, higher correction factors may be applied to meet the actual net energy demand. For example, the degree of an immune challenge may be applied as a status correction factor within a predefined range. For example, subclinical diseases represent a light immune challenge with a strength between no infection and a major infection. The introduction of a degree of an inflammatory status allows for consideration of a strength of an immune challenge.

According to an embodiment, measuring immune parameters comprises analysing infection biomarkers. For example, analysis of biomarkers may comprise RNA profiling techniques and/or mass spectroscopy. In another example, blood samples are analysed regarding haptoglobin, mannan binding lectin, 12 cytokines, glucose and/or insulin concentrations.

According to an embodiment, determining a net energy demand of a livestock comprises, in case the inflammatory status indicates an immune challenge, increasing a non-infection base net energy demand by 20-25%. According to an example, this mentioned net energy demand increase is 23%. According to another example, this mentioned net energy demand is 15 to 35%. With these ranges, an additional net energy demand of an infected animal organism can be offset avoiding waste of feed due to overcompensating energy losses on one hand, and, at the same time, ensuring sufficient nutrition for the animals. Another aspect can be seen in avoiding a loss of growth performance with lower rates of depositing fat and protein. The increase can be interpreted as the additional net energy for maintenance (ME_{maintenance}) in case of a challenged immune system. For example, determining a net energy demand of a livestock comprises, in case the higher-degree inflammatory status indicates an immune challenge, increasing a non-infection base net energy demand by 20-25%.

According to an embodiment, determining a net energy demand of a livestock comprises, in case the inflammatory status indicates a subclinical or lower-degree immune challenge, increasing a non-infection base net energy demand by 10-20%. In other words, if an animal suffers from only a light immune challenge, the necessary compensation for metabolizable energy for maintenance is lower. An advantage can be seen in more precise formulations, in particular energetic densities.

According to an embodiment, the step of determining a net energy demand of a livestock comprises a step of calculating a metabolic efficiency factor and/or metabolic transformation factor of an animal. In other words, the control unit can calculate a metabolic efficiency factor or metabolic transformation factor considering a variety of influencing variables such as animal health state and environmental condition data. According to an embodiment, measuring an animal health state comprises a step of measuring an animal heat production. This is because animals with a challenged immune system or an infection show increased heat emission as part of the immune system response. Measuring such an amount or degree of an increased heat production can provide a basis for measuring the inflammatory status and therefore for determining an animal health state. Technically, this can be implemented by infrared sensors or any other suitable temperature sensors. In an example, a heat production is measured in a respiratory chamber.

According to an embodiment, determining a raw materials net energy comprises a step of measuring a mycotoxin level of raw materials. A quality of raw materials is determined by the containment of certain chemicals or microorganisms. For instance, mycotoxins may decrease the digestibility. Therefore, measuring a mycotoxin level in raw materials can lead to more precise net energy values of raw materials. The measuring of a mycotoxin level may be done by a specialised analysis unit which may be arranged at a raw materials supply unit.

According to an embodiment, obtaining environmental condition data comprises measuring a temperature, ventilation, bacteria containment, hygienic conditions, and/or humidity in the livestock. In other words, environmental conditions can describe any conditions except feed as such that influence a metabolism of an animal. For example, bacteria containment can refer to salmonella or other microorganisms.

According to an embodiment, determining a raw materials net energy comprises a step of analyzing raw materials by Near Infrared Spectroscopy (NIR). According to an example, determining raw materials net energy comprises a step of chemically analyzing raw materials. According to an embodiment, the mixing unit control data comprises mixing process properties of the mixing unit. As described above, such process properties may comprise temperature, pressure, speed, throughput, granularity of raw materials and/or additives, processing step sequences and other process parameters. Mixing process properties can influence a net energy value of the produced feed mix. For instance, higher temperatures can induce chemical and/or metabolic reactions and physical interactions which can lead to higher or lower net energy values and a higher or lower efficiency of the produced feed mix.

According to an embodiment, mixing unit control data comprises controlling a raw materials supply unit and/or controlling an additives supply unit and/or controlling the mixing process. In other words, mixing unit control data can be understood as multidimensional control data that are able to completely control a feed mill plant. In one example, in a fully automated feed mill plant, an operator receives mixing unit control data from a service provider and provides the mixing unit control data to the mixing unit without further modification. This includes controlling the supply of additives and raw materials from, for example, silos at the feed mill plant.

According to an embodiment, the method further comprises the step of measuring, by a feed mix analysis unit, a net energy value of a produced feed mix. An advantage of this analysis step is a quality check of a produced feed mix, particularly to determine a net energy of a produced feed mix. For example, with the availability of the input data such as raw materials properties and additives information as well as mixing process properties, a self-learning model can be established to further optimize feed formulations. Such data could be used as training data for a neural network, for instance using supervised learning techniques.

In another aspect of the invention, a mixing appliance for producing an animal feed mix is proposed. The mixing appliance comprises a raw material analysis unit adapted for determining a raw material net energy and a control unit configured to calculate, based on the determined raw materials net energy, mixing unit control data, the mixing unit control data comprising a feed formulation of raw materials and additives, such that the resulting net energy value of the produced feed mix is equal to the net energy demand of the livestock. A mixing unit is adapted to mix, based on the feed mixing control data, defined volumes of raw materials and/or defined volumes, contents and/or proportions of feed additives to produce a feed mix.

According to an embodiment, the mixing appliance further comprises a raw materials supply unit and/or additives supply unit, adapted to be controlled by mixing unit control data and to provide a defined volume of raw materials and/or a defined volume of feed additives to the mixing unit. According to an embodiment, the control unit is located remotely from the mixing unit and the mixing appliance comprises a wide area data communications connection between the control unit and the mixing unit, raw materials supply unit and/or the additives supply unit. The advantage of a remote operation can be seen in a simplification of operation for feed mill plants as the complex intelligent functions can be separated and outsourced, whereas the mixing appliance can be kept technically robust and simple. This can reduce cost and complexity on the feed mill plant site.

According to an embodiment, the raw materials analysis unit comprises a data communications interface for providing raw materials analysis data to the control unit. This allows farmers or feed mill plant operators to perform an analysis of delivered raw materials on site while outsourcing the complex calculations of raw materials net energy to a specialised third-party. In this case, the control unit can be located centrally in a cloud computing environment and receives measurement data from the raw materials analysis unit and can incorporate it into the determination and calculation of the raw materials net energy. On site, devices and hardware of the farmers or feed mill operators can be, again, kept simple and robust and can therefore reduce cost and complexity.

It must be understood that features of the method as described in the above and in the following may be features of the computer program, the computer-readable medium and intralogistics system as described in the above and in the following, and vice versa.

Further aspects of the invention relate to a computer program for determining feed mixing control data for a mixing unit of a feed mixing appliance, which, when being executed by a processor, is adapted to carry out the steps of the method as described in the above and in the following as well as to a computer-readable medium, in which such a computer program is stored. For example, the computer program may be executed in a processor of a control unit of a mixing appliance. The computer-readable medium may be a memory of this control unit. In general, a computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory.

A computer-readable medium may also be a data communication network, for example, the Internet, which allows downloading a program code. The computer-readable medium may be a non-transitory or transitory medium. It has to be understood that features of the method as described in the above and in the following may be features of the computer program, the computer-readable medium and the hearing system as described in the above and in the following, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Figure 1 shows the net energy model for nutrition requirements determination.
Figure 2 shows simplified ratios of metabolizable energy for animals in normal conditions and for immune challenged animals.
Figure 3 shows a mixing appliance according to the invention for producing an animal feed mix.
Figure 4 shows a method for determining feed mixing control data for a mixing unit of a feed mixing appliance.
Figure 5 shows a system for determining an animal health state and environmental conditions data of a livestock.
Figure 6 shows components of a raw materials analysis unit for determining a raw materials net energy.
Figure 7 shows a platform model with a centralised data hop and a remotely connected mixing appliance.

The reference symbols used in the drawings, and their meanings, are listed in a summary form in the list of reference symbols. In principle, identical parts are provided with the same reference symbols in the figures. While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### DETAILED DESCRIPTION OF EXEMPLARY EMBODIMENTS

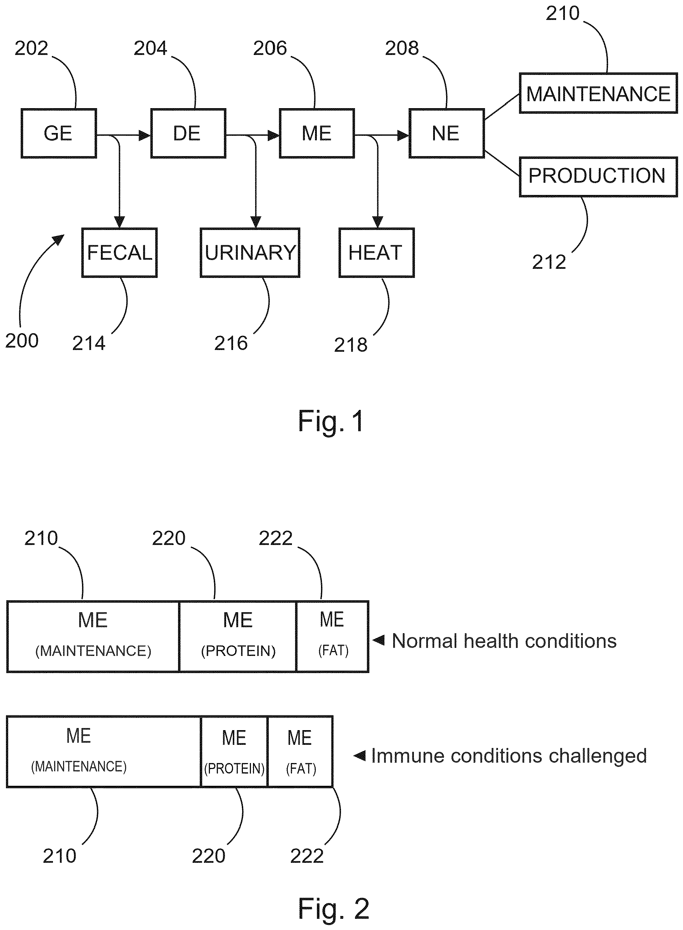

Figure 1 shows a net energy model 200 for describing a flow of energy from raw materials and additives across different stages to an energy use in an animal for maintenance and production. The net energy model 200 can be seen as a more precise model for describing animal nutritional requirements, wherein the resulting energy requirement for the animal can be determined more precisely compared to models in prior art. In detail, a gross energy 202 from raw materials 10 is converted into digestible energy 204, whereas faecal losses 214 of animals are considered. In a next step, the digestible energy 204 is converted to metabolizable energy 206, whereas urinary and gas losses 216 of the animals are deducted. A portion of the metabolizable energy 206 is used for generation of animal heat 218 and the remaining energy portion is defined as net energy 208.

This more precise model of the use of the gross energy 202 coming from the raw materials 10 and additives 12 down to a value for net energy 208 can further be detailed into a portion metabolizable energy for maintenance 210 referring to body functions of the animal organism. The remaining portion of the net energy can be defined as metabolizable energy for production 212 depositing fat and protein and an animal's body. The main advantage of this model is a more precise determination of the actual nutritional requirements of an animal and can be understood as a basis for this invention. Another objective and aspect of the invention is an increase of welfare for animals by providing a best possible nutrition maintaining a stable health status while improving a production efficiency.

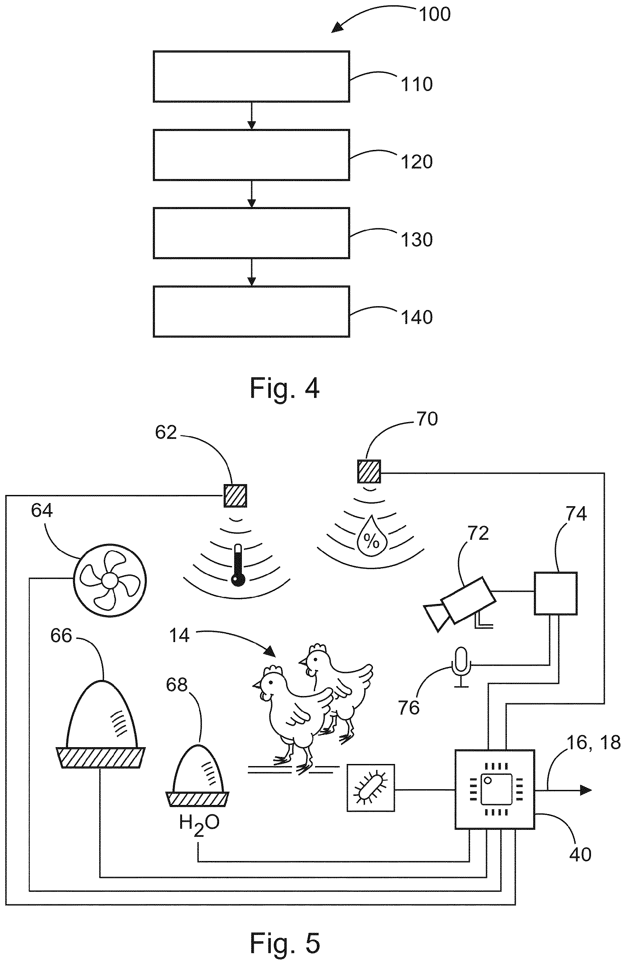

The net energy model 200 assumes a healthy animal under standard conditions. For these conditions, nutrition tables are available to calculate a nutritional demand based on a variety of input data such as animal type, age, species and others. However, real livestock conditions are more complex, and a variety of additional variables have an influence on a net energy demand of an animal and therefore a livestock. In recent years, precision livestock farming emerged as a set of methods and systems to optimise conditions for further optimise animal production while maintaining a high level of animal welfare. In particular, a net energy demand of a livestock 20 is influenced by an animal health state 16 and environmental conditions described by environmental conditions data 18. For details in terms of a determination of such health and environmental aspects it is referred to Figure 5.

In Figure 2, simplified ratios of metabolizable energy for animals in normal conditions and for immune challenged animals are schematically shown. The same scheme can be applied to net energy. Whereas the models and methods in prior art rely on normal conditions, ratios of energy portions are changed under challenged conditions. Such a challenge condition can be a decreased or challenged animal health state 16 wherein animals can suffer from diseases, infections and other health challenges. In this case, animal organisms require a higher portion of energy for maintaining body functions. At the same time, the overall available net energy 208 is decreased and the ratios of metabolizable energy for maintenance 210 and metabolizable energy for production 212 are different from normal standard conditions. As a result, under immune challenged conditions, the available metabolizable energy for production 212 comprising metabolizable energy for depositing protein and metabolizable energy for depositing fat is lower. To offset this loss, a net energy demand 208 of a livestock 20 is increased, this needs to be considered when calculating feed mixing control data for a feed mix 22.

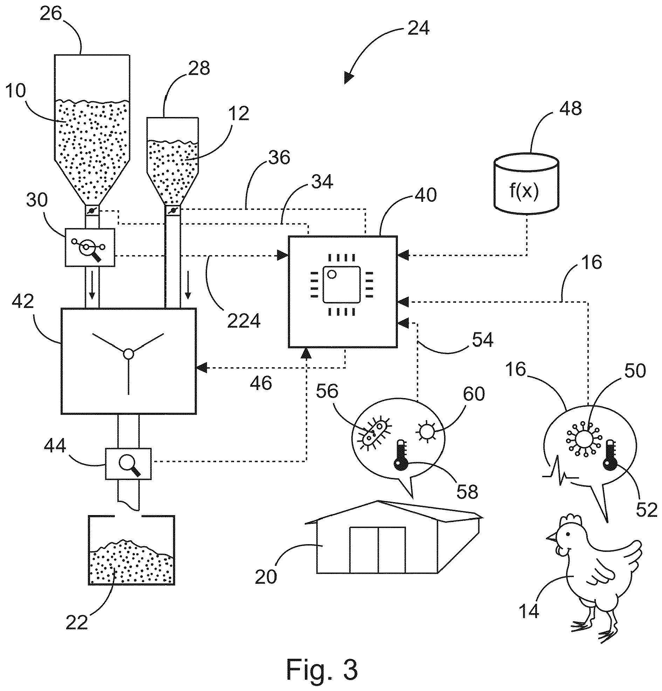

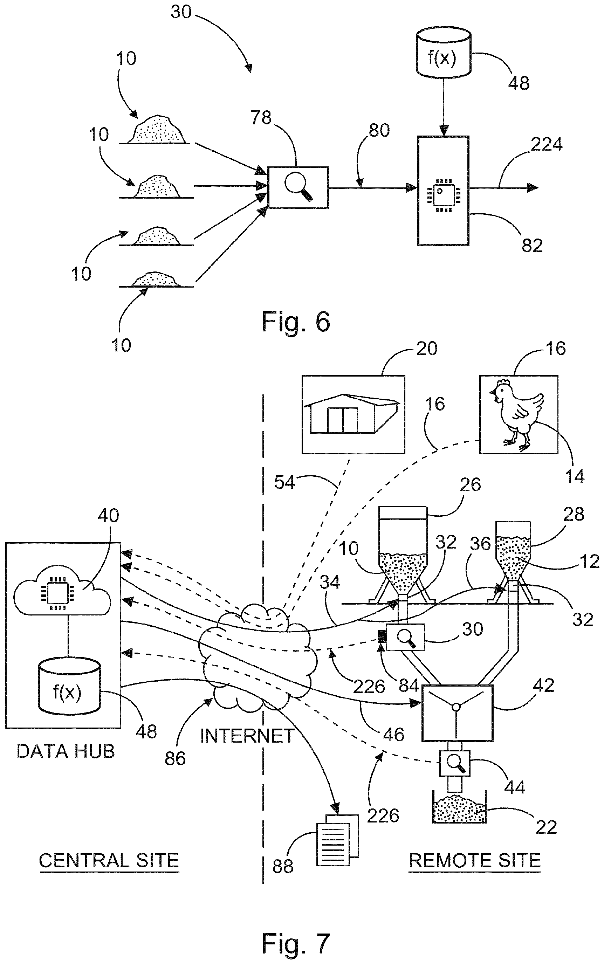

In Figure 3, a mixing appliance 24 according to the invention for producing an animal feed mix 22 is shown. The mixing appliance 24 comprises a raw materials supply unit 26 and an additives supply unit 28. For example, the two supply units 26, 28 can be silos or containers but can also be provided as pipelines, conveyors or any other supply mechanism. The supply units 26, 28 raw materials and additives can each have a volume control means 32 for controlling a supplied volume of raw materials 10 and/or additives 12. These volume control means 32 are controlled by volume control information for raw materials 34 and volume control information for additives 36. The volume control information 34, 36 are provided by the control unit 40. A raw materials analysis unit 30 is adapted to determine a raw materials net energy 224. For further details on the features of the raw materials analysis unit 30 it is referred to Figure 6.

The raw materials 10 and additives 12 are then provided to a mixing unit 42 which is adapted to mix defined volumes of raw materials 10 and/or defined volumes of feed additives 12 to produce a feed mix 22. The mixing unit 42 can be based on a variety of different mixing techniques known in prior art. The mixing unit 42 can be further adapted to induce chemical reactions for modified feed mix 22 properties, for example, by adjusting a temperature, pressure or allow addition of additional additives for supporting a chemical or physical modification. A feed mix analysis unit 44 can be provided to allow a quality check of the produced feed mix 22 by determining a net energy value of a produced feed mix 22. According to an example, the feed mix analysis unit 44 is based on infrared spectroscopy technology. According to another example, the feed mix analysis unit is based on a chemical analysis of a feed mix sample 22.

The control unit 40 is configured to calculate, based on the determined raw materials net energy 224 determined by the raw materials analysis unit 30, mixing unit control data 46 comprising a feed formulation of raw materials 10 and additives 12. The control unit 40 is adapted to perform the calculation of the mixing unit control data 46 such that the resulting net energy value 226 of the produced feed mix 22 is equal to a net energy demand of the livestock 228.

According to an example, the net energy value 226 of the produced feed mix 22 varies less than +/- 10% compared to a net energy demand of the livestock 228. According to another example, the net energy value 226 of the produced feed mix 22 varies less than +/- 5% compared to a net energy demand of the livestock 228.

The mixing unit control data 46 is calculated by the control unit 42 to control the raw materials supply unit 26 and the additives supply unit 28 by providing volume control information for raw materials 34 and/or volume control information for additives 36. In addition, mixing properties such as mixing sequences or steps with different mixing properties like temperature or pressure can be contained in the mixing unit control data 46.

A feed formula database 48 is configured to provide functions, equations and/or models for determining a feed formulation for a feed mix 22. The feed formula database 48 can be seen as the repository for any static or dynamic calculation, for example, providing nutrition tables, specific equations and correlations. According to an example, the feed formula database 48 comprises a graph model for modelling interdependencies and correlations between raw materials ingredients 10 and/or additives 12 in relation to a resulting net energy of a feed mix 226.

The control unit 40 is, furthermore, provided with an animal health state 16 which can comprise any information related to a physical or chemical or health condition of an animal 14. Such animal health state 16 related information can be, for example, immune parameters 50, a heat production 52 of an animal 14. More specific, the immune parameters 50 can be an inflammatory status indicating a degree of an immune challenge of an animal 14. According to another example, the immune parameters can also be measured by analysing infection biomarkers. For example, in case an inflammatory status indicates an immune challenge, a non-infection net energy demand 228 of a livestock 20 is increased by 20 to 25%. In case of a subclinical or lower degree immune challenge, a non-infection net energy demand 228 of a livestock 20 is increased by 10 to 20%.

As stated above, a net energy demand 228 of a livestock 20 also depends on the environmental conditions in a livestock represented by environmental condition data 54. These environmental condition data 54 can represent the physical, biological and/or chemical conditions in a poultry house or barn such as temperature, humidity, ventilation, lighting conditions 60, bacterial containment 56, and/or any other hygienic conditions.

In Figure 4, a method, according to the invention, for determining feed mixing control data 46 for a mixing unit 42 is suggested. The method is based on, for example, a proposed mixing appliance according to Figure 3 which is adapted to perform the steps described below. The method comprises the step 110 of determining, by the raw materials analysis unit 30, a raw materials net energy 224 of a batch of raw materials 10 and/or additives net energy 230. In a next step 120, an animal health state 16 and/or environmental condition data 54 of a livestock 20 is obtained. Based on the animal health state 16 and/or based on environmental conditions data 54, a livestock net energy demand 228 is determined. A next step 140 comprises a calculating, by the control unit 40 and based on the determined raw materials net energy 224, mixing unit control data 46 for a mixing unit 42. The mixing unit control data 46 comprise volumes or ratios of raw materials 10 and additives 12 such that the resulting feed mix net energy 226 of the produced feed mix 22 is equal to the determined net energy demand 228 of the livestock 20.

In Figure 5, a system according to the invention for determining an animal health state 16 and environmental conditions data 18 of a livestock 20 is schematically described. A control unit 40 is adapted to process several input data from a variety of sensors to obtain or calculate an animal health state 16 or an environmental conditions data 18 of a livestock 20. A temperature sensor 62 is adapted to measure several temperature conditions in a poultry house or barn based on known measurement principles such as infrared measurement. The temperature sensor 62 can be adapted to measure a heat production 52 of an animal 14. Ventilation information can be obtained from a ventilation system 64 or from sensors measuring an airflow or air quality. According to an example, an air analysis unit is adapted to analyse substances and/or concentrations of chemicals like ammonia, methane or other elements in an air sample.

A sensor equipped feed supply unit 66 is adapted to measure volumes of feed and a sensor equipped water supply unit 68 is adapted to measure volumes of water consumed by animals 14. These data can be used to calculate a ratio of consumed feed to consumed water which can be a base for determination of animal feed consumption patterns. Such patterns can allow an assessment of an immune status and immune parameters 50 of animals 14. A humidity sensor is adapted to measure a humidity in a poultry house or barn of a livestock 20. A video capturing device 72 such as a camera is connected to a video analysis unit 74. The video analysis unit is adapted to analyse movement patterns of animals 14.

Typical abnormal movement patterns can relate to a challenged immune status or a generic health challenge of an animal 14. A noise capturing unit 76 such as a microphone or microphone array is adapted to capture animal noise, for instance, in a poultry house or barn. According to an example, the video analysis unit 74 is based on a machine learning algorithm providing a classification of observed movement patterns of animals 14 and/or captured noise patterns of animals 14. The noise patterns or movement patterns can be then classified into normal patterns or abnormal patterns to determine an animal health state 16. The control unit 40 in Figure 5 can be integrated with the control unit 40 described in Figure 3 but can also be a separated integrated circuit or computing unit.

In Figure 6, a raw materials analysis unit 30 according to the invention is shown as a simplified block scheme. Samples of raw materials 10 are provided to an NIR (Near Infrared Spectroscopy) analysis unit 78 which is configured to determine raw materials parameters (analytical results 80) such as proximate, total and digestible amino acids, total phosphorus, phytic phosphorus and digestible/available phosphorus as well as AME (apparent metabolizable energy) and/or apparent metabolizable energy (AMEn) corrected to zero nitrogen retention. According to an example, instead of NIR, a chemical lab analysis process is applied. In a second step, the analytical results 80 from the NIR analysis unit 78 are provided to a conversion unit 82. A feed formula database 48 provides necessary nutritional equations and nutritional models for calculating a nutritional value, in particular a net energy value of the raw materials 224. The conversion unit 82 is adapted to calculate, based on the analytical results 80 from the NIR unit 78 and/or based on the provided models and formulas from the feed formula database 48, net energy values 224 of raw materials samples 10. As part of that process, the conversion unit 82 is adapted to calculate or derive additional values such as starch, NDF, fatty acids, calcium, sodium, chlorine, potassium and others.

In Figure 7, a special configuration of the mixing appliance 24 according to the invention is shown comprising a centrally arranged control unit 40 and a remotely connected mixing unit 42 along with raw materials supply unit 26 and additives supply unit 28. The dotted lines symbolise input data streams from a side to a central site and continuous lines symbolise control data or output data to the remote site. For example, the central site can be a cloud computing data centre of a service provider, whereas the remote site can be a feed mill plant, a farming site, a barn, stall, poultry house, or any feed or animal production facility. The shown example in Figure 7 shows a control unit 40 implemented as a cloud service which is connected to a feed formula database 48. In other words, an advantage can be that these components are centrally hosted intelligent computing functions, whereas the remaining components can be kept technically simpler and can be arranged geographically separated or spatially separated on-site on a farm or in a feed mill plant.

On the remote site, a raw materials supply unit 26 with raw materials 10 as well as an additives supply unit 28 with additives 12 are provided. A raw materials analysis unit 30 analyses raw materials 10 and determines net energy values 224 of raw materials 10 which are then transmitted, via a data communication interface 84, to the central data hub, in particular the control unit 40. A mixing unit 42 produces a feed mix 22 optionally providing a feed mix analysis unit 44. The feed mix analysis unit 44 can, in turn, provide the feed mix net energy 226 two the control unit 40. An animal health state 16 of animals 14 and/or environmental condition data 54 of a livestock 20 are also provided as input data (dotted lines) over a data communications network 86 to the central site, in particular the control unit 40. The data communications network 86 can be a dedicated wide area network, local area network, wireless network, or any other suitable network or data connection. For example, the data communications network 86 can be an Internet connection over a virtual private network.

The control unit 40 of the centralised data hub is configured to control volumes of supplied raw materials 10 by controlling volume control means 32 of the raw materials supply unit 26 and the additives supply unit 28. The control unit 40 is furthermore configured to calculate mixing unit control data 46 to control the mixing unit 42 comprising volumes or ratios of raw materials 10 and additives 12 such that the resulting feed mix net energy 226 is equal to the determined net energy demand 228 of the livestock 20. The advantage of the setup can be seen in separating demanding intelligent functions from rather simple production functions leading to the possibility of providing robust, priceless, and simple technique at the remote site while concentrating computing and intelligence functions along with the necessary more complex support services in a specialised central location.

Additional features such as a documentation function can be implemented, for example, providing electronic documentation text documents 88 for farmers or feed mill plant operators comprising feeding and nutrition information of historic feed mix production cycles or animal feeding cycles. As an advantage, such documentation can be fully or partly automated and can therefore save time and efforts particularly for farmers and feed mill operators.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### REFERENCE SIGNS

- 10: raw materials
- 12: additives
- 14: animal
- 16: animal health state
- 18: environmental conditions data
- 20: livestock
- 22: feed mix
- 24: mixing appliance
- 26: raw materials supply unit
- 28: additives supply unit
- 30: raw materials analysis unit
- 32: volume control means
- 34: volume control information for raw materials
- 36: volume control information for additives
- 40: control unit
- 42: mixing unit
- 44: feed mix analysis unit
- 46: mixing unit control data
- 48: feed formula database
- 50: immune parameters
- 52: heat production
- 54: environmental condition data
- 56: bacterial containment
- 58: livestock temperature
- 60: lighting conditions
- 62: temperature sensor
- 64: ventilation system
- 66: feed supply unit with sensor
- 68: water supply unit with sensor
- 70: humidity sensor
- 72: video capturing device
- 74: video analysis unit
- 76: noise capturing unit
- 78: NIR analysis unit
- 80: analytical results from NIR
- 82: conversion unit for calculating nutritional values
- 84: data communication interface
- 86: data communications network
- 88: documentation text document

- 100: method for determining feed mixing control data
- 110: determining raw materials net energy
- 120: obtaining animal health state and/or environmental condition data
- 130: determining livestock net energy demand
- 140: calculating mixing unit control data

- 200: net energy model
- 202: gross energy
- 204: digestible energy
- 206: metabolizable energy
- 208: net energy
- 210: metabolizable energy for maintenance
- 212: metabolizable energy for production
- 214: faecal losses
- 216: urinary and gas losses
- 218: animal heat generation
- 220: metabolizable energy for depositing protein
- 222: metabolizable energy for depositing fat
- 224: raw materials net energy
- 226: net energy of produced feed mix
- 228: net energy demand of livestock
- 230: additives net energy

## Claims

1. A computer-implemented method (100) for determining mixing unit control data (46) for a mixing unit (42) of a feed mixing appliance (24),
wherein the feed mixing appliance (24) comprises
- a raw materials analysis unit (30) for determining a raw materials net energy (224);
- a control unit (40) configured to control a mixing unit (42) and to calculate the feed mixing unit control data (46), the feed mixing unit control data (46) comprising a feed formulation of raw materials (10) and/or additives (12);
- a mixing unit (42) adapted to mix, based on the feed mixing unit control data (46), defined volumes of raw materials (10) and/or defined volumes of feed additives (12) to produce a feed mix (22);
the method (100) comprising the steps of
- determining (110), by the raw materials analysis unit (30), a raw materials net energy (224) of a batch of raw materials (10) and/or an additives net energy (230);
- obtaining (120) an animal health state (16) and/or environmental conditions data (18) of a livestock (20);
- determining (130) a livestock net energy demand (228) of a livestock (20) based on the animal health state (16) and/or based on environmental conditions data (18) of the livestock (20);
- calculating (140), by the control unit (40) and based on the determined raw materials net energy (224), mixing unit control data (46) for a mixing unit (42), comprising volumes or ratios of raw materials (10) and/or additives (12), such that the resulting feed mix net energy (226) of the produced feed mix (22) is equal to the determined net energy demand (228) of the livestock (20).

2. Method (100) according to claim 1, wherein obtaining the animal health state comprises measuring of immune parameters of animals in a livestock.

3. Method (100) according to claim 2, wherein measuring immune parameters comprises analysing movement patterns of animals, animal feed and/or water consumption patterns and/or determining a ratio of consumed feed to consumed water.

4. Method (100) according to one of the claims 2 or 3, wherein measuring immune parameters comprises a step of detecting an inflammatory status indicating a degree of an immune challenge.

5. Method (100) according to any of the claims 2 to 4, wherein measuring immune parameters comprises analysing infection biomarkers.

6. Method (100) according to any of the claims 4 or 5, wherein determining a net energy demand of a livestock comprises, in case the inflammatory status indicates an immune challenge, increasing a non-infection net energy demand by 20-25%.

7. Method (100) according to any of the claims 4 to 6, wherein determining a net energy demand of a livestock comprises, in case the inflammatory status indicates a subclinical or lower-degree immune challenge, increasing a, non-infection, base net energy demand by 10-20%.

8. Method (100) according to any of the claims 1 to 7, wherein the step of determining a net energy demand of a livestock comprises a step of calculating a metabolic efficiency factor and/or metabolic transformation factor of an animal.

9. Method (100) according to any of the claims 1 to 8, wherein measuring an animal health state comprises a step of measuring an animal heat production.

10. Method (100) according to any of the claims 1 to 9, wherein determining a raw materials net energy (224) comprises measuring a mycotoxin level of raw materials.

11. Method (100) according to any of the claims 1 to 10, wherein obtaining environmental condition data comprises measuring a temperature, ventilation, lighting conditions, bacteria containment, hygienic conditions, and/or humidity in the livestock.

12. Method (100) according to any of the claims 1 to 11, wherein determining a raw materials net energy (224) comprises a step of analysing raw materials by Near Infrared Spectroscopy (NIR).

13. Method (100) according to any of the claims 1 to 12, wherein the mixing unit control data (46) comprises mixing process properties of the mixing unit (42).

14. Method (100) according to any of the claims 1 to 13, wherein mixing unit control data (46) comprises controlling a raw materials supply unit and/or controlling an additives supply unit and/or controlling the mixing process.

15. Method (100) according to any of the claims 1 to 14, wherein the method (100) further comprises the step of measuring, by a feed mix analysis unit, a net energy value of a produced feed mix.

16. A computer program for determining feed mixing control data for a mixing unit (42) of a feed mixing appliance (24), which, when being executed by a processor or control unit (40), is adapted to carry out the steps of the method (100) of one of the previous claims.

17. A computer-readable medium, in which a computer program according to claim 16 is stored.

18. Mixing appliance (24) for producing an animal feed mix, comprising
- a raw materials analysis unit (30) adapted for determining a raw materials net energy (224);
- a control unit (40) configured to calculate, based on the determined raw materials net energy (224), mixing unit control data (46), the mixing unit control data (46) comprising a feed formulation of raw materials and additives, such that the resulting net energy value of the produced feed mix is equal to the net energy demand of the livestock.
- a mixing unit (42) adapted to mix, based on the feed mixing control data, defined volumes of raw materials and/or defined volumes of feed additives to produce a feed mix;
wherein the mixing appliance is adapted to execute the steps of the method (100) according to any of the claims 1 to 15.

19. Mixing appliance (24) according to claim 18, wherein the mixing appliance further comprises a raw materials supply unit and/or additives supply unit, adapted to be controlled by mixing unit control data (46) and to provide a defined volume of raw materials and/or a defined volume of feed additives to the mixing unit (42).

20. Mixing appliance (24) according to any of the claims 18 or 19, wherein the control unit (40) is located remotely from the mixing unit (42) and the mixing appliance comprises a wide area data communications connection between the control unit (40) and the mixing unit (42), raw materials supply unit and/or the additives supply unit.

21. Mixing appliance (24) according to any of the claims 18 to 20, wherein the raw materials analysis unit (30) comprises a data communication interface for providing raw materials analysis data to the control unit (40).
